Europäisches Patentamt

(19) European Patent Office

Office européen des brevets

(11) Publication number: **0 018 229**
**B1**

(12) **EUROPEAN PATENT SPECIFICATION**

(45) Date of publication of patent specification: **20.04.83**

(51) Int. Cl.³: **B 60 T 13/14**

(21) Application number: **80301277.2**

(22) Date of filing: **21.04.80**

(54) Tractor/trailer braking system with residual (secondary) braking.

(30) Priority: **19.04.79 GB 7913596**

(43) Date of publication of application:
**29.10.80 Bulletin 80/22**

(45) Publication of the grant of the patent:
**20.04.83 Bulletin 83/16**

(84) Designated Contracting States:
**DE FR GB IT SE**

(56) References cited:
**DE - B - 1 274 903**
**DE - B - 2 051 004**
**DE - B - 2 243 472**

(73) Proprietor: **CLAYTON DEWANDRE COMPANY LIMITED**
**P.O. Box 9 Titanic Works**
**Lincoln, LN5 7JL (GB)**

(72) Inventor: **Page, Wilbur Mills**
**48 Jensen Road**
**Bracebridge Heath Lincoln (GB)**

(74) Representative: **Hartley, David et al,**
**c/o Withers & Rogers 4 Dyer's Buildings Holborn London, EC1N 2JT (GB)**

Courier Press, Leamington Spa, England

Tractor/trailer braking system with residual (secondary) braking

This invention relates to full power closed centre hydraulic braking systems for automotive vehicle trailer combinations and especially tractor/semi-trailer combinations.

One such system which has been proposed includes both service and emergency line connections between the tractor and the trailer, each with its associated return line. The emergency line provides a constant supply of hydraulic fluid from the vehicle through a relay valve on the trailer mounted storage unit or accumulator, and a service line which, when activated by the foot or hand control on the tractor, actuates the relay valve to deliver pressure fluid from the accumulator to the trailer service brakes.

Although full power hydraulic braking systems have been used for some considerable time on rigid vehicles, both private and commercial, the system has not been widely used for articulated combinations. This is for several reasons not least among which is the problem of connecting and disconnecting the two systems, the inclusion of return lines (which are not required on air systems) and the ability of the system to take care of internal leaks without pressurising the return lines and thence the coupling interface on the trailer when it is disconnected from the tractor. The greatest inhibiting factor, however, which is fundamental to all hydraulic systems is that the reservoir fluid volume is limited. Air systems on the other hand have unlimited atmosphere to draw on and for example a single energy source (Compressor) can pump against multi-system protection valves thus ensuring continual charging of an unfailed circuit. This "overflow" technique cannot be supplied to hydraulics and a serious system leak on the trailer could empty the tractor fluid reservoir in a few minutes, leaving only limited stored energy for braking. However, in order to overcome this deficiency the tractor system could be fitted with a triple element pump, that is one element for each of the tractor axles (or circuits) and the third element for the trailer.

This invention arose during design of a trailer system which can be coupled to such a tractor system or to a conventional power system embodying a dual storage reservoir, dual hydraulic pump, dual brake valve which applies the front and rear brakes of the tractor as separate circuits and a pressure storage circuit for the parking brake which may be energised via a non-return valve by the pump element supplying the front axle circuit, whilst the rear axle brake circuit together with pressure storage for the relay valves controlling the trailer brakes can be energised by the second element of the pump.

When the tractor brakes are applied, trigger lines from the two axle circuits are simultaneously pressurised to operate a dual relay valve in a modulated manner to operate the trailer brakes.

In the case of an accidental parting of any tractor and trailer in service the trailer brakes must be applied automatically. This is triggered by either the disruption of the emergency (supply) line between tractor and trailer or a disconnection of the emergency coupling. The tractor system is also so arranged that a failure in the parking circuit energy source destroys pressure in the trailer emergency line thus applying the trailer brakes.

It is an object of this invention to provide secondary or residual braking on the trailer or semi-trailer after a trailer service brake failure, in full power hydraulic trailer braking systems.

According to this invention we propose a full power closed centre hydraulic braking system for vehicle trailer combinations, including service and emergency line connections between the towing vehicle and the trailer each with its associated return line, the emergency line providing a constant supply of hydraulic fluid from the towing vehicles through an emergency relay valve on the trailer, to a trailer mounted storage unit or accumulator, the emergency relay valve being adapted to deliver pressure fluid from the accumulator to the trailer service brake actuators when the service line is actuated by a control on the tractor or in the event of a loss of pressure on the service line, characterised in that the trailer service brake actuators are dual actuators being connected with the said emergency relay valve for primary service braking and also connected for secondary service braking by the service line pressure via secondary or residual brake valve responsive to a loss of pressure in the primary braking circuit. Preferably, the secondary brake valve is connected both to the accumulator pressure and the service line pressure such that a floating piston balanced by two pressures moves in the event of a service actuator pressure, to connect the dual actuator with the service line pressure so to apply the trailer brakes in concert with the towing vehicle service brakes.

Preferred embodiments of this invention will now be described by way of example with reference to the accompanying drawings of which:

Figure 1 is a circuit diagram of a two line semi-trailer hydraulic brake system with residual braking;

Figure 2 shows a dual actuator such as used in the system of Figure 1;

Figure 3 is a cross-section of the relay emergency valve in the system of Figure 1;

Figure 4 is a cross-section of a residual brake valve as used in the embodiment of Figure 1; and

Figure 5 is a cross-section of a modified form of residual brake valve for use in a system of the kind shown in Figure 1.

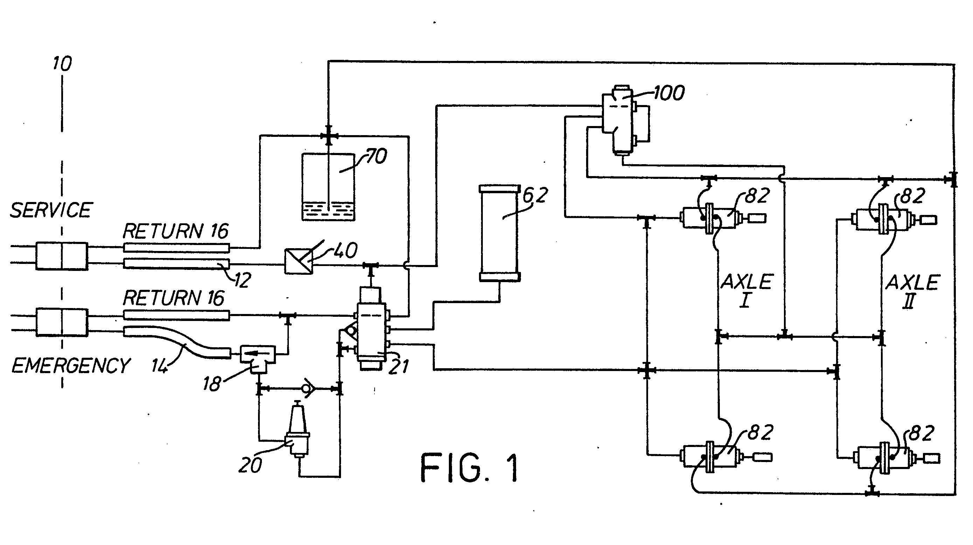

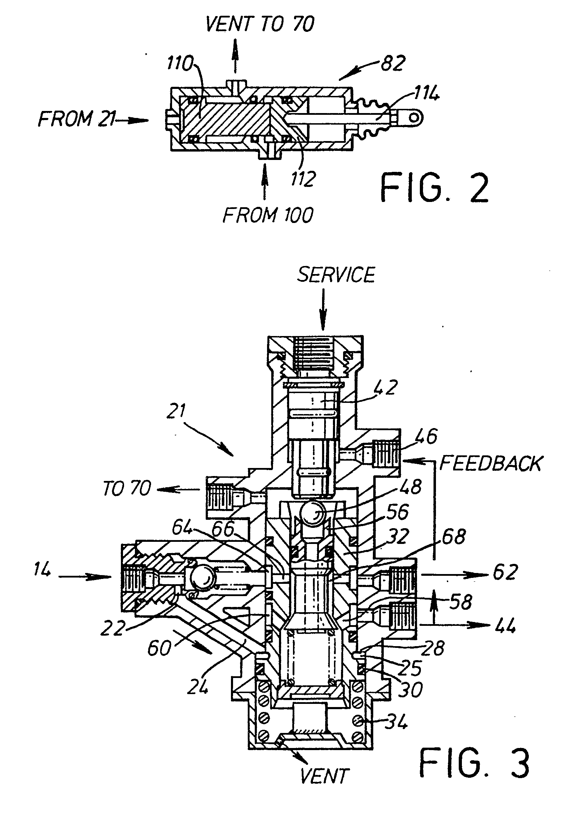

The semi-trailer braking system of Figure 1 is connected to the tractor braking system by a coupling 10 which may be of the kind described in our U.K. Patent Application GB—A—2008217 and includes a service control line 12, and emergency line 14 and associated return lines 16. Connected to the emergency line 14 via a changeover valve 18 biased in the direction indicated and pressure protection valve 20, is the inlet of a relay emergency valve 21 which is fitted with a spring loaded, ball-type non-return valve 22 and a by-pass drilling 24 leading to an annular chamber 25 defined between the valve housing 28 and a shoulder 30 of a floating spool 32 which is biased upwardly by a control spring 34. The service line is connected via load sensing valve 40 to the control port and piston 42 of the relay emergency valve. Delivery port 44 as well as supplying pressure to the actuators is also connected to port 46 to supply a balance feedback pressure to the plunger 42, to control firstly the movement of the steel ball exhaust valve 48 in relation to its conical seat at the upper end of valve plunger 56 and secondly the relative movement of plunger 56 to valve sleeve 32. At its lower end the plunger 56 has a conical valve portion which seats on an upwardly converging conical seat formed internally of the spool 32 just above drillings 58 communicating with the delivery port 44 via an annular groove 60. As shown in Figure 3, the accumulator 62 is connected to the emergency line pressure through the non-return valve 22 and via an external groove around the spool 32, the groove 64 being linked by drillings 66 with a chamber 68 defined by a recess in the plunger 56.

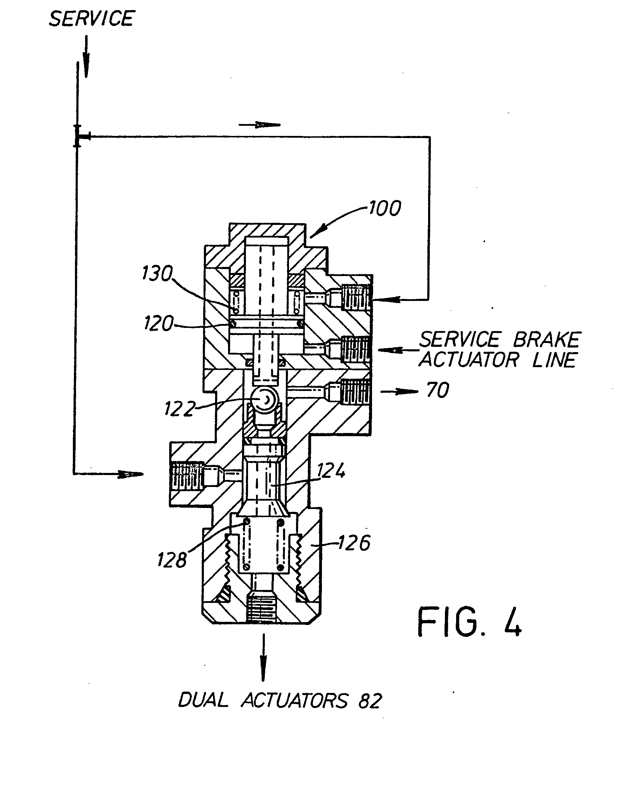

The service control line pressure modulated by the load sensing valve 40 also triggers a residual brake valve 100 (secondary) which is shown in detail in Figure 4, providing dual control of the service braking actuators 82 shown in more detail in Figure 2. Each actuator 82 has a primary piston 110 to the end of which is applied the emergency valve delivery pressure (port 44) and which freely abuts a secondary piston or plunger 112 subject to the residual brake delivery pressure. Hence the secondary piston 112, which is operatively linked by a rod 114 to the brakes, is movable either by the primary piston 110 in response to the emergency valve delivery pressure or directly in response to the residual brake valve delivery pressure.

Referring now to Figure 4, the residual brake valve 100 has a balancing piston 120 which bears upon a steel ball exhaust valve 122 seating on a conical surface of the upper end of a spool valve 124 biased upwardly within the housing 126 by a control spring 128. The service control line pressure from load sensing valve 40 is applied above the balancing piston which is lightly biased by a spring 130 in opposition to the service brake delivery pressure from the relay emergency valve 21.

In this system some service braking is available under the foot in the event of a service actuator or accumulator failure on the trailer. This is accomplished by the inclusion of the residual brake valve (Figure 4) and the introduction of dual actuators (Figure 2). The pressure protection valve 20 is also important since this is set to close on pressure loss in the trailer system to protect the tractor system at a pressure just below low pressure warning switch setting so that the tractor pump can continue to energise the service system. In this way an effective service control line pressure would be available (as long as the tractor reservoir fluid plus stored energy lasts on the tractor) to directly pressurise the secondary or residual actuator cylinders.

With the trailer coupled to the tractor, and the tractor engine running both tractor and trailer systems are charged simultaneously. The trailer accumulator 62 is charged by the emergency line 14 via the changeover valve 18, pressure protection valve 20 and relay emergency valve 21. During initial charging, the relay emergency valve 21 in its at rest position as shown in figure 3 connects the accumulator 62 to the service brake actuators (Figure 2) thus applying the trailer brakes. Initially, the brakes are via the relay emergency valve 21 by pressure fluid directed to the primary pistons 110 in the dual actuators 82. The design of the dual actuators 82 ensures that no component is completely dormant (to meet the present EEC regulations which ensures that parts with safety or reserve role will function efficiently when required). Displacement of the 'residual' piston means that some fluid is drawn through the open exhaust valve 122 of the residual brake valve 100.

When a predetermined pressure has been reached (usually coincident with the low pressure warning switch setting pressure), the spool valve or sleeve 32 of relay emergency valve 21 is moved upwards due to the pressure in annulus 28 to a stop position on the body, taking the valve 18 out of the emergency mode by closing off the accumulator connection to the actuators delivery port 44 and allowing actuator fluid to exhaust through valve 48 to the expansion chamber 70 and service return line 16. The accumulator 62 continues to be charged via the emergency line 14 until pump 'cut-out' pressure is reached on the tractor.

When the driver applies the tractor foot brake the trailer service control line 12 is energised in the conventional way and the relay emergency valve 21 operates in its simple relay valve mode dispensing fluid from the accumulator 62 on the trailer to operate the service actuators 82 on both axle I and axle II. Pressure being relayed onto the primary pistons 110 in the dual actuators 82. However, pressure is also directed under the 'balancing' piston 120 of the residual brake valve 100. At the same time service control line pressure which triggers off this brake actuation not only supplies pressure to the relay emergency valve 21 but also the opposing face of the 'balancing' piston 120 referred to above.

The light spring biasing the balancing piston is preferably such as to just open the valve so that during normal (unfailed) braking the components would move slightly — again to meet the 'dormant' devices regulation. This bias would be overcome very quickly by the bias in area in favour of the actuator pressure side of the piston, thus returning the valve to the off position.

In the event of failure at the accumulator 62 of service actuators 82 the loss of actuator pressure under the 'balancing' piston 120 in the residual brake valve 100 allows service control pressure to force the piston 120 down to open the valve to the same service control pressure (what is called a self feed valve). This pressure is directed to the residual pistons or plungers 112 in the dual actuators 82 thus applying the trailer brakes in a graduated manner in concert with the tractor brakes.

The bias changeover valve 18 is included to ensure that the emergency line 14 stays unpressurised. A leaking non-return valve 22 at inlet to the relay emergency valve 21 could allow accumulator pressure to pressurise this line when the trailer is disconnected. It automatically moves under the influence of the bias spring on de-coupling and opens the line between the relay emergency valve and the coupling to vent to expansion tank 70. An advantage which accrues is that this line is dumped very quickly which ensures a rapid action of the relay emergency valve to move into the emergency mode.

The suggested stowing of trailer couplings ( B' into 'A') where emergency 14 and service pressure 12 lines are joined together would, with these systems, ensure absence of pressure in the service coupling in the event of leaking valves since the service would be vented via the emergency line. In this connection, reference is made to British Patent Applications GB—A—2008217 (Hose Couplings) and GB—A—2007788 (Hydraulic Systems).

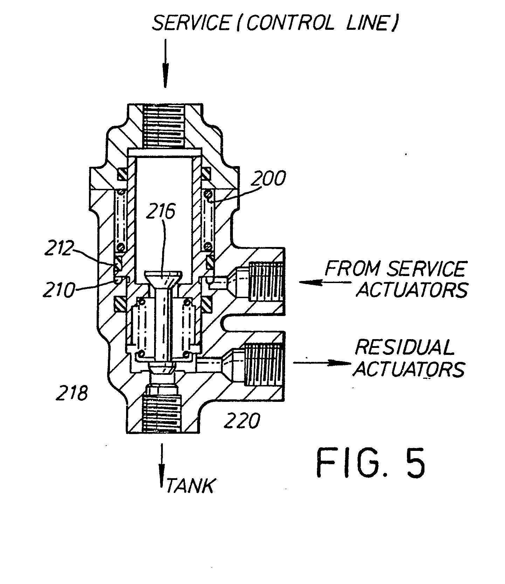

Figure 5 shows another residual brake valve which can be used in place of the valve described above with reference to Figure 4.

The valve is biased by a spring 200 to the open position so that on a normal brake application fluid under pressure will flow from the service control line 12 to act upon the residual pistons or plungers 112 in the dual actuators 82. However, at the same time, if the system is fully serviceable pressurised fluid from the service actuator line is fed to an annular chamber 210 beneath the control piston 212 forcing the piston upwards against the action of the spring 200. This upward movement brings the delivery seal 214 into contact with the valve head 216 thus closing off the service control line 12 and further movement lifts the exhaust head 218 of the valve away from the exhaust seat 220 thus allowing the small amount of fluid which has passed to the actuators to be exhausted to expansion tank 70. This initial action of the valve is to ensure that the device is exercised regularly to avoid possible seizure. (EEC regulations on 'dormant' devices).

Should a failure occur in the brake line to the primary pistons of the dual actuators 82 or in the accumulator 62 system on the trailer preventing service application of the brakes service pressure plus the bias spring load will force the control piston 212 down thus closing off the exhaust to tank 70 and opening the delivery valve passage to the residual pistons 112 of the dual actuators 82, thus applying the trailer brakes proportionally via the service control line in concert with the tractor brakes.

Parking is achieved in the system described above, by means of a conventional mechanical handbrake not shown in the drawings.

Our European Patent Application EP—A—0018227 describes a tractor/trailer braking system with spring brake emergency braking and parking and our European Patent Application EP—A—0018228 describes another tractor/trailer braking system with reserve spring braking and parking.

## Claims

1. A full power closed centre hydraulic braking system for vehicle/trailer combinations, including service and emergency line connections (12, 14) between the vehicle and the trailer each with its associated return line (16), the emergency line (14) providing a constant supply of hydraulic fluid from the vehicle through an emergency relay valve (21) on the trailer, to a trailer mounted storage unit or accumulator (62), the emergency relay valve (21) being adapted to deliver pressure fluid from the accumulator (62) to the trailer service brake actuators (82) when the service line (12) is actuated by a control on the tractor or in the event of a loss of pressure on the service line, characterised in that the trailer service brake actuators (82) are dual actuators being connected with the said emergency relay valve (21) for primary service braking and also connected for secondary service braking by the service line pressure via secondary or residual brake valve (100) responsive to a loss of pressure in the primary braking circuit.

2. A braking system according to claim 1 wherein the secondary or residual brake valve (100) has a floating piston and is connected both to the accumulator (62) pressure and the service line pressure such that the floating piston is balanced by the two pressures and, in the event of a service actuator (82) or accumulator (62) failure, moves to connect the dual actuators with the service line pressure so to apply the trailer brakes in concert with the vehicle service brakes.

3. A braking system according to claim 1 or claim 2 wherein the emergency line is connected to the emergency relay valve (21) via a biased changeover valve (18) which opens in response to pressure on the emergency line and a pressure protection valve (20) set to close on pressure loss in the trailer system.

4. A braking system in accordance with any one of claims 1 to 3 wherein each trailer service dual actuators (82) comprises a primary piston to which is applied the emergency relay valve delivery pressure and which freely abuts a secondary piston or plunger operatively linked to the trailer brake and subject to the secondary or residual brake valve (100) delivery pressure, whereby the secondary piston is movable to operate the brakes either by the primary piston in response to the relay emergency valve (21) delivery pressure or in response to the secondary or residual brake valve (100) delivery pressure.

**Patentansprüche**

1. Hydraulisches mit konstantem Druck arbeitendes Bremssystem für Fahrzeug-Anhänger-Kombinationen mit Betriebs- und Notleitungsverbindungen (12, 14) zwischen dem Fahrzeug und dem Anhänger mit jeweils zugeordneter Rücklaufleitung (16), wobei die Notleitung (14) für eine konstante Hydraulikfluidzufuhr vom Fahrzeug über ein Notsteuerventil (21) am Anhänger zu einem Speicher (62) oder einer Speichereinheit sorgt, der am Anhänger angebracht ist, und wobei das Notsteuerventil (21) dafür eingerichtet ist, Druckfluid von dem Speicher (62) zu den Betätigungseinrichtungen (82) der Betriebsbremsen des Anhängers zu liefern, wenn die Betriebsleitung (12) durch eine zugfahrzeugseitige Steuerung oder im Falle eines Druckverlusts in der Betriebsleitung aktiviert wird, dadurch gekennzeichnet, daß die Betätigungseinrichtungen (82) der Betriebsbremsen für den Anhänger Zweikreisbetätigungseinrichtungen sind, welche mit dem Notsteuerventil (21) für ein primäres Betriebsbremsen und durch den Betriebsleitungsdruck über ein Sekundär- oder Restbremsventil (100) für ein sekundäres Betriebsbremsen verbunden sind, das auf den Druckverlust im Primärbremskreis anspricht.

2. Bremssystem nach Anspruch 1, bei welchem das Sekundär- oder Restbremsventil (100) einen freibeweglichen Kolben aufweist und sowohl mit dem Druck des Speichers (62) als auch mit dem Betriebsleitungsdruck derart verbunden ist, daß der freibewegliche Kolben durch die beiden Drucke im Gleichgewicht gehalten ist und sich bei einer Störung einer Betätigungseinrichtung (82) der Betriebsbremsen oder des Speichers (62) so bewegt, daß die Zweikreisbetätigungseinrichtungen mit dem Betriebsleitungsdruck verbunden werden, um die Anhängerbremsen zusammen mit den Fahrzeugbetriebsbremsen anzulegen.

3. Bremssystem nach Anspruch 1 oder 2, bei welchem die Notleitung mit dem Notsteuerventil (21) über ein vorgespannts Umschaltventil (18), das ansprechend auf Druck in der Notleitung öffnet, und ein Druckschutzventil (20) verbunden ist, das so eingestellt ist, daß es bei einem Druckverlust im Anhängersystem schließt.

4. Bremssystem nach einem der Ansprüche 1 bis 3, bei welchem jede der Zweikreisbetätigungseinrichtungen (82) der Betriebsbremsen des Anhängers einen Primärkolben aufweist, auf den der vom Notsteuerventil abgegebene Druck einwirkt und der frei an einem Sekundärkolben oder Stössel anliegt, der wirkungsmäßig mit der Anhängerbremse verbunden ist und dem Abgabedruck des Sekundär- oder Restbremsventils (100) ausgesetzt ist, wodurch der Sekundärkolben derart bewegbar ist, daß die Bremsen entweder durch den Primärkolben ansprechend auf den Abgabedruck des Notsteuerventils (21) oder ansprechend auf den Abgabedruck des Sekundär- oder Restbremsventils (100) betätigt werden.

**Revendications**

1. Un système de freinage à pleine puissance hydraulique à centre fermé pour une combinaison véhicule/remorque comprenant des conduites de connexion (12, 14) de service et de secours entre le véhicule et la remorque, chacune comprenant sa conduite de retour associée (16), la conduite (14) de secours assurant une alimentation constante de fluide hydraulique provenant du véhicule à travers une soupape relais de secours (21) placée sur la remorque, en direction d'un accumulateur (62) ou d'une unité de stockage montée sur la remorque, la soupape relais de secours (21) étant adaptée de façon à délivrer un fluide sous pression à partir de l'accumulateur (62) vers les organes d'actionnement (82) des freins de service de la remorque lorsque la conduite de service (12) est actionnée par une commande placée sur le véhicule ou dans le cas d'une perte de pression sur la conduite de service, caractérisé en ce que les organes d'actionnement (82) des freins de service de la remorque sont des organes d'actionnement double qui sont reliés à ladite soupape de relais de secours (21) pour le freinage de service primaire et qui sont également reliés pour le freinage de service secondaire par la conduite de service sous pression via une soupape (100) de frein résiduel ou secondaire en réponse à une perte de pression dans le circuit de freinage primaire.

2. Un système de freinage selon la revendication 1, dans lequel la soupape (100) de frein résiduel ou secondaire comporte un piston mobile et est reliée à l'accumulateur (62) de pression et à la conduite de service sous pression de telle façon que le piston mobile est équilibré par les deux pressions et que, dans le cas d'une défaillance d'un organe d'actionnement de service (82) ou de l'accumulateur (62), il se déplace de façon à relier les organes d'actionnement double avec la conduite de service sous pression de façon à appliquer les freins de la remorque de concert avec les freins de service du véhicule.

3. Un système de freinage selon la revendication 1 ou la revendication 2, dans lequel la conduite de secours est reliée à la soupape relais de secours (21) par l'intermédiaire d'une soupape de commutation sollicitée (18) laquelle s'ouvre en réponse à une pression dans la conduite de secours et une soupape de protection de pression (20) disposée de façon à se fermer à la suite d'une perte de pression dans le système de la remorque.

4. Un système de freinage selon l'une quelconque des revendications 1 à 3, dans lequel chacun des organes d'actionnement double de service de la remorque (82) comprend un piston primaire auquel est appliquée la pression de fourniture de la soupape relais de secours et qui vient buter librement contre un piston secondaire ou plongeur lié opérativement aux freins de la remorque et soumis à la pression de fourniture de la soupape de frein résiduel ou secondaire (100), grâce à quoi, le piston secondaire est mobile de façon à actionner les freins, soit par le piston primaire en réponse à la pression de fourniture de la soupape relais de secours (21), soit en réponse à la pression de fourniture de la soupape de frein résiduel ou secondaire (100).

FIG. 1

10

SERVICE

RETURN 16

12

EMERGENCY 14

18

20

40

70

62

21

100

82

82

AXLE
I

AXLE
II

82

82

0018 229

VENT TO 70

110

82

FROM 21→

114

FROM 100

112

# FIG. 2

SERVICE

42

21

46

FEEDBACK

TO 70←

48

56

64  66

32

68

14→

62

58

22

44

60

28

24

25

30

34

VENT

# FIG. 3

SERVICE

100

130

120

SERVICE BRAKE
ACTUATOR LINE

122

70

124

128

126

FIG. 4

DUAL ACTUATORS 82

3

SERVICE (CONTROL LINE)

FIG. 5